# EUROPEAN PATENT SPECIFICATION

(11) **EP 2 765 879 B1**
(45) Date of publication and mention of the grant of the patent: **24.02.2016**
(21) Application number: 12784084.1
(22) Date of filing: 11.10.2012
(51) Int. Cl.: A42B 3/22

(54) **VISOR AND METHOD OF MANUFACTURE**
VISIER UND HERSTELLUNGSVERFAHREN DAFÜR
VISIÈRE ET SON PROCÉDÉ DE FABRICATION

(30) Priority: 11.10.2011 GB 201117522
(43) Date of publication of application: 20.08.2014
(60) Divisional application: 16150652.2
(73) Proprietor: Pinlock Patent B.V., 8232 WL Lelystad (NL)
(72) Inventor: ARNOLD, Derek, Leslie, NL-8303 ZV Emmeloord (NL)
(74) Representative: Nederlandsch Octrooibureau
(86) International application number: PCT/NL2012/050713
(87) International publication number: WO 2013/055217

(56) References cited:
- WO-A1-2008/075953
- WO-A2-02/18986
- US-A- 6 113 813
- US-B1- 6 547 390

## Description

### BACKGROUND OF THE INVENTION

### 1. Field of the Invention

The present invention relates to visors, in particular to visors provided with photochromatic regions that can change colour or shade in reaction to incident light. The invention further relates to methods of manufacturing visors comprising active elements integrally moulded therewith. Such visors are particularly applicable to helmets such as motorcycle helmets and the like.

### 2. Description of the Related Art

It has long been desired to provide visors for helmets that can automatically change colour in response to incident light conditions. Driving in bright sunlight, especially when it has rained, or at sunrise or sunset can be hazardous but driving with a tinted visor at night is also dangerous and in many countries is illegal. Some helmets are provided with a secondary pull-down tinted visor or sun-strip that can partially overcome these inconveniences. Nevertheless, such arrangements are often bulky and complicated and may require costly helmet revisions to the shell and inner lining. Photochromatic materials have been developed that are capable of changing colour in response to incident light. Various mechanisms exist but one of the most promising mechanisms exhibited by oxazine and naphthopyran pigments requires the pigment molecule to change shape or open in response to UV light of a given wavelength. Nevertheless, the integration of such pigments into a visor is complicated. Pigments introduced directly into the material forming the visor do not function adequately for various reasons. The polycarbonate material used for almost all impact protective visors has a relatively compact molecular structure and this can inhibit operation of the photochromatic mechanism when embedded in the polycarbonate by preventing the pigment molecules from opening. Additionally, the UV stabilizers used to prevent photo-degradation of the visor material can also prevent the UV light from activating the pigment. UVB light in the range 280 nm to 315 nm is particularly damaging for many polymers and UV stabilizers are used to remove these wavelengths. Even though the photochromatic pigments may be sensitive to other wavelengths outside this range, the overall effectiveness of the pigment is reduced.

A system for providing a helmet visor with a removable fog-free insert has been described in WO 0113750, the contents of which are hereby incorporated by reference in their entirety. Such inserts have also been provided with photochromatic pigment layers in order to achieve a photochromatic effect. Nevertheless, due to their position behind the visor such inserts only partially darken. Due to the UV-stabilizers in the visor material, only about 65% darkening (about 35% light transmission) has been achieved.

A solution proposed in WO02/18986 makes use of a photochromatic film applied to an outer surface of a visor by means of an adhesive. This allows an existing visor to be easily adapted but once applied, subsequent removal of the film is likely to leave the visor impaired. Films applied in this manner are also often subject to peeling and may become unsightly. Furthermore, many photochromatic pigments are adversely affected by moisture and such films do not always provide adequate protection in this sense, causing accelerated degradation of the pigments.

Another solution has been proposed in WO2008/075953, the contents of which are hereby incorporated by reference in their entirety. According to that document, a light-sensitive layer may be detachably applied to the outer surface of a visor. In an alternative embodiment, a plastic layer or film may be injection moulded together with a transparent plate. Although these solutions appear to provide a suitable way of attaching a photochromatic layer to a visor, they do not address the problems of ensuring adequate operation of the photochromatic pigments while avoiding photo-degradation of the visor material. They also fail to address the problems of injection moulding the visor and the film in a single process. The heat required during injection moulding can cause many photochromatic pigments to be irreparably damaged. Manufacture of visors is a relatively costly exercise in that each visor must be injection moulded in an expensive, custom made two-part mould. A major factor in the expense of the mould is the high quality finish on the inner mould surface. This is required in order to achieve an optical quality finish to the visor allowing unimpaired vision. Although once produced, a single mould may be used for many thousands of visors, each change in shape or detail will require manufacture of a new mould at considerable expense.

### BRIEF SUMMARY OF THE INVENTION

According to the invention there is provided a visor for a helmet or the like, comprising a curved, transparent shield having an inner surface and an outer surface, the shield being provided with attachment elements for connecting the visor to the helmet and further comprising a viewing region, the viewing region being provided with a photochromatic insert at its outer surface, capable of responding to incident light, wherein the shield is formed of a first plastic material provided with an amount of UV stabilizing additives, the UV stabilizing additives protecting the first plastic material from degradation by UV radiation during use, and wherein the insert comprises a second plastic material without UV stabilizing additives or having substantially less UV stabilizing additives than the first plastic material. By providing the insert without significant UV stabilizers, response of the photochromatic insert to incident light is improved over those that use UV stabilizers in the outer surface region while nevertheless ensuring protection from light degradation for the remainder of the visor. Furthermore, any degradation that does occur is limited to the photochromatic insert region and is less visibly noticeable due to the presence of pigments in this region.

In the present context, UV stabilizers are intended to include UV absorbers that absorb UV energy and may convert it into other energy forms and also other forms of compound that interrupt or prevent photo-degradation of the plastic material. A preferred form of stabilizer is a conjugated organic system which absorbs UV radiation due to the double bonds within the molecules absorbing light energy in the UV region and re-emitting it in the IR region. Such compounds include benzophenones and benzotriazoles.

Furthermore, in the present context, photochromatic is intended to denote a substance that changes colour or shade in response to particular incident light and returns to its original condition in the absence of such light. In particular, such substances are generally activated by UV light corresponding generally to the same light that would cause degradation of the plastic materials in the absence of UV stabilizers.

The skilled person will understand that the wavelength range of light that causes greatest degradation of the plastic material may be different to the wavelengths of light that cause actuation of the photochromatic insert. For a photochromatic insert that is responsive to incident light in the 315 nm to 400 nm range, it is preferred that the second plastic material is substantially free of stabilizing additives that operate in this range.

In one embodiment of the invention, the first and second plastic materials may be substantially the same. This is particularly advantageous from a moulding and manufacturing perspective as the materials are then implicitly compatible with one another and can form a homogenous final product. By substantially the same, it may be understood that they are chemically the same and belong to the same class of materials although they may be provided with different additives and may differ slightly in e.g. melting point or other physical properties.

Although various materials may be employed for the visor, preferably the first plastic material comprises polycarbonate. This is presently the most conventional material for helmet visors due to its excellent engineering properties and ease of manufacture and also for its optical properties and high impact resistance. Nevertheless, other alternatives to polycarbonate may be considered, including but not limited to acrylic based polymers, poly(methyl methacrylate) (PMMA), polystyrene, cyclic olefin polymers (COP), cyclic olefin copolymers (COC), polyurethane and cellulose acetate. In particular, where high impact resistance is less important, other materials may be preferred for the shield. An advantage of the invention is that the insert may still provide high impact resistance in the viewing region.

In one embodiment of the invention, the insert may be removably attached to the outer surface of the shield. By removably attached it is hereby intended that the insert may be attached and detached at will, allowing the visor to be used with or without the insert. To this end, mechanical attachment provisions may be provided on the shield and/or the insert. These can comprise clips, magnets, hook and eye fasteners, mushroom fasteners (3M Dual Lock™) and the like.

Most preferably, the insert and the shield are fused or melted or otherwise permanently joined to form an integral unit. This may be achieved by integrally injection moulding both elements to together. The resulting visor will preferably have a seamless join between the insert and shield, avoiding reflections, refraction, dirt and moisture ingress, sharp edges and the like. Although reference is made to injection moulding of both elements together, as will be explained further below, this does not necessarily require both elements to be injection moulded.

According to a preferred form of the invention, the insert has a thickness of between 0.3 mm and 0.7 mm, preferably around 0.5 mm. In general, increasing the thickness of a visor reduces light transmission and optical quality and should be avoided. For removable inserts, a greater thickness may be desirable to provide stability. For integral inserts, the insert may be relatively thinner and a material thickness of just 0.3 mm to 0.5 mm may be achievable. For general motorcycle use, the visor may have an overall thickness of between 2 mm and 3.5 mm. It may also be tapered from the edges to the middle in order to improve optical correctness. For an integrally formed visor, the insert thickness will determine the remaining space for flow of the injected shield material. A relatively thin insert may therefore be desirable. In this manner, it may even be possible to provide a visor with integral insert having an overall thickness no greater than a conventional visor. Also, such an integrally formed visor may have a stiffer structure and its impact resistance may be increased due to the laminate construction. According to an important aspect of the invention, a high impact insert may thus be combined with other lower impact materials for the shield which may be more beneficial from a moulding perspective, including materials that may be moulded at a lower temperature that would be less detrimental to a photochromatic pigment layer. In general, the insert will be curved to match the radius of the shield, having either a 2-D or a 3-D curvature. Preferably, the curves will match perfectly to avoid moulding material from entering a space in front of the insert. For removable inserts on 2D visors, the insert may be initially flat and may be curved to fit the visor on attachment. The insert may be provided with a functional coating on its outer surface, in particular, anti-scratch and anti-fog or hydrophobic coatings are desirable.

According to one preferred embodiment of the invention, the insert comprises a photochromatic layer between an inner and an outer protective layer, at least the outer protective layer comprising the second plastic material. Such a laminate sandwich construction has been found very effective in optimizing the properties of the photochromatic layer while adequately protecting and supporting it. The absence or reduction in UV stabilizers in the outer protective layer allows UV light to penetrate to activate the photochromatic layer.

The photochromatic layer may comprise a photochromatic pigment incorporated in a polymer matrix. A preferred form of pigment comprises molecules that break open when activated by UV radiation, causing them to refract the incident light. Exemplary compounds include oxazines and naphthopyrans. In order to operate effectively, such pigment molecules should be supported in a polymer matrix of relatively low molecular density compared to that of e.g. polycarbonate. A preferred matrix material comprises polyurethane although other similar polymers may be used. The matrix material may in particular act as an adhesive layer between inner and outer protective layers. According to a further aspect of the invention there is also provided a method of manufacturing a visor for a helmet or the like having a photochromatic insert region, the method comprises providing insert material having the desired photochromatic functionality; thermoforming the insert material into a curved 2D or 3D shape to form an insert; locating the insert within a mould; and injection moulding visor material into the mould to form a curved visor having an inner surface and an outer surface, wherein the insert forms a portion of the outer surface. In the present context it is understood that the portion is less than the whole outer surface of the visor. It is also understood that the thermoforming of the insert material may take place either in the same mould or in another mould prior to the injection moulding step. It is further understood that thermoforming is distinct from injection moulding in that during thermoforming the insert material is merely softened and is not melted. As a result of the above mentioned process, a visor may be formed having a photochromatic insert region having properties that are distinct from those of the remainder of the visor. For the purposes of nomenclature, the remainder of the visor may be termed the shield. Many photochromatic materials and photochromatic effects are extremely expensive compared to the cost of the underlying visor material. Limiting their application to only a photochromatic insert region may provide significant savings both in terms of material costs and in terms of manufacture.

According to a preferred embodiment of the method, the insert material comprises an extruded film. Extruded films are relatively cheap to manufacture and can be imparted with desirable properties. Such films may be formed to have high optical quality which is retained even after the injection moulding process. Preferably, the insert material comprises an optical quality grade surface prior to location within the mould which is at least sufficient for certification for road use.

According to one embodiment of the invention, the insert material comprises a multilayer laminate. This allows further functionality to be incorporated into the insert prior to injection moulding. The functionality may be provided in an intermediate layer provided with an interface layer on its rear surface and a protective layer on its front surface. The interface layer may be adapted to be compatible with the visor material and may also protect the other layers of the insert from the heat of the injection moulding process. The protective layer may protect the photochromatic functionality of the intermediate layer during use of the visor and it may also bond with the visor material at its edges to form a continuous surface substantially without interruptions. In this manner, environmental degradation of the photochromatic functionality due to dirt, moisture, light etc may be significantly reduced and the longevity of the visor increased.

The insert comprises a photochromatic layer. As discussed above, this is a desirable functionality to provide at a front surface of a visor. Nevertheless, the skilled person will recognize that the present inventive method may also be applicable to other functional inserts, including coloured and decorative inserts and also inserts having desirable optical qualities.

The method is applicable to photochromatic visors in which the visor material comprises UV stabilising additives and the insert material comprises relatively less of the UV stabilising additives than the visor material.

According to a further aspect of the invention, the photochromatic insert region is limited to a viewing region of the visor. This is particularly the case where the photochromatic functionality relates to visual characteristics of the resulting visor. In the present context, the viewing region may be defined by the portal opening of the helmet on which the visor is later attached. The photochromatic insert region may also be visibly different from the remainder of the visor and may have a distinctive shape. In this manner the presence of the photochromatic insert can be emphasized in the final product which may be particularly useful for publicity and branding purposes. According to an important aspect of the invention, the shape of the insert may thus be varied without adapting or changing the mould.

According to a still further important aspect of the invention, the mould has a cavity and a surface of the cavity corresponding to the outer surface of the visor has a non-optical quality finish. By non-optical quality finish is meant one which would itself be insufficiently smooth or optically correct for producing an optical quality visor by injection moulding onto that surface. The outer surface of the visor may be of non-optical quality over its whole surface or just over that part of the surface where the insert is located. The cost of producing such a mould is significantly lower than the cost of producing a conventional optical quality mould.

Additionally, further functionality may be provided to the insert region by e.g. providing a functional coating on an exterior surface of the insert prior to moulding. One particular coating that may be provided is a scratch resistant coating. In present procedures, after a visor has been moulded it may be coated completely on its outer surface with a hard, scratch resistant coating of hard acrylic, melamine, silicone, or polysiloxane compounds. Raw uncoated polycarbonate has a relatively soft surface and can be damaged merely by exerting finger pressure over and along its surface. According to the present invention, such a coating may be previously applied to the insert material as supplied. This reduces the process by one step and may also lead to further cost savings since only the insert region is treated. The coating may be an anti-scratch and/or anti-fog coating or any other appropriate treatment. It is of course understood that certain treatments after moulding may be nevertheless desirable, where it is explicitly intended to treat both the insert region and the remainder of the visor. It is also understood that while in general the insert may be applied to the outer surface of the visor it is also possible to apply the same technique to provide an integrally moulded insert region on an inner surface of the visor. In this manner, an optical quality visor may be produced from a mould of non-optical quality by making use of optical quality inserts at both the internal and external surfaces. The skilled person will also understand that a photochromatic insert may be provided at the inner surface if the shield material does not include substantial UV stabilizing additives operative in the sensitivity wavelength range of the photochromatic material or pigment. Narrow spectrum UV stabilizing additives may be used to protect the shield material while still allowing transmission of those wavelengths that actuate the photochromatic pigment located at the inner surface.

The insert, or at least the photochromatic layer or part of that insert, is preferably maintained below about 150°C during injection moulding of the visor material. This may be achieved by covering the photochromatic layer with an interface layer as described above having sufficient thickness to limit heat conduction during the moulding procedure. Additionally or alternatively, the surface of the mould adjacent to the insert may be cooled: Excessive temperature may damage the photochromatic material as is the case with many photochromatic pigments. Additionally, melting of the outer surface of the thermoformed insert is to be avoided as this could lead to degradation of the optical quality.

It is also possible to inject polycarbonate at a higher temperature than 150°C. In this way the normal production cycle of the mould may be shortened without damaging the photochromatic pigment. Higher temperatures will also decrease the viscosity of the polycarbonate, whereby a higher flow rate and shorter cycle time can be obtained. The polycarbonates of the laminated sheet material and that of the injected shield may be of the same composition or type in order to avoid visual disparity and improve cohesion. As discussed above however, different materials may also be used for the shield and for the insert.

During injection moulding, it is important that none of the visor material enters between the insert and the adjacent surface of the mould. The mould may be provided with a vacuum suction arrangement in order to retain the insert firmly in contact with the mould surface. The skilled person will be aware of other ways of retaining the insert in position including e.g. static charge and the like or by laying the insert in a vertically opening mould. In one particularly desirable form of the invention, the method is applied to visors of the type having a cavity at their inner face and a corresponding bulge on the outer surface. Such visors are presently available for receipt of inserts under the Pinlock 100% Max Vision™ brand. For manufacturing such visors, the mould has a cavity and a surface of the cavity corresponding to the outer surface of the visor comprises a recess having a shape approximating the shape of the insert. The insert may be placed in the recess prior to injection of the visor material.

### BRIEF DESCRIPTION OF THE DRAWINGS

The features and advantages of the invention will be appreciated upon reference to the following drawings of a number of exemplary embodiments, in which:
Figure 1 shows a perspective view of a visor having a removable insert according to a first embodiment of the present invention;
Figure 2 shows a partial cross-section taken through the insert of Figure 1;
Figure 3 shows a perspective view of a visor according to a second embodiment the invention;
Figure 4 shows a partial cross-section through the visor of Figure 3; and
Figures 5A to 5D show steps in the manufacture of the visor according to Figure 3.

### DESCRIPTION OF ILLUSTRATIVE EMBODIMENTS

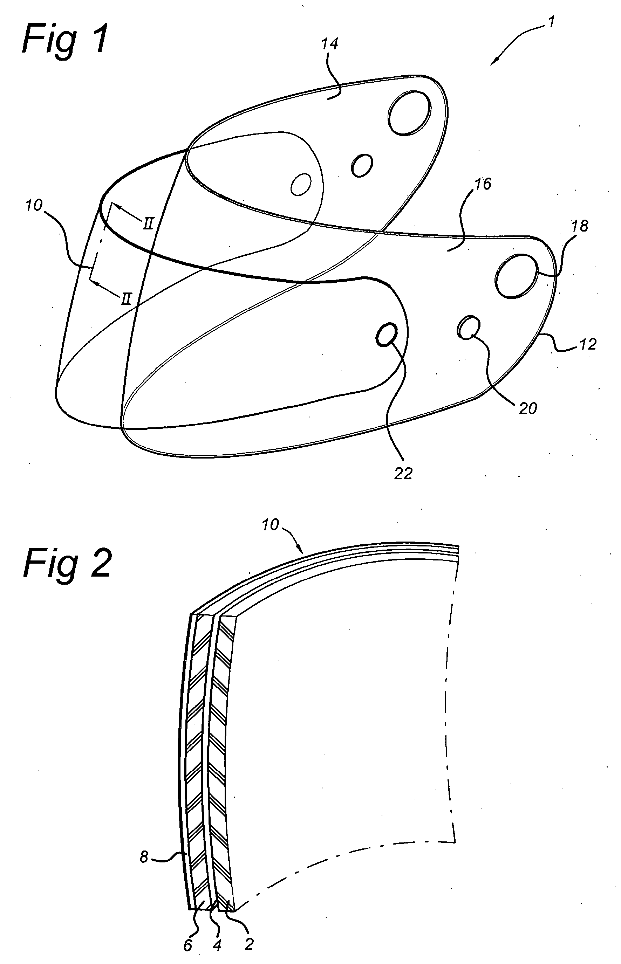

Fig. 1 shows a perspective view of a visor according to the present invention in an exploded view. The visor 1 is intended for a motorcycle helmet (not shown) and comprises a curved, transparent shield 12 having an inner surface 14 and an outer surface 16. The shield is provided with attachment elements 18 for connecting the visor 1 to the helmet and magnetic studs 20. The shield 12 is otherwise conventional in construction and is formed of polycarbonate material having a quantity of UV stabilizing additives sufficient to prevent discoloration of the visor during normal daytime use. The shield 12 has a thickness of around 2 mm. A photochromatic insert 10 is provided located in front of the shield outer surface 16. The insert 10 is also transparent and curved to match the shield 12. The insert 10 is provided with magnetic disks 22.

Fig. 2 shows a partial cross-section taken through the insert 10 of Fig. 1. As can be seen, the insert 10 comprises an interface layer 2, an intermediate layer 4, a protective layer 6 and an outer coating 8. According to the embodiment shown, the interface layer 2 and protective layer 6 are formed of polycarbonate, each having a thickness of 0.2 mm. Unlike the polycarbonate of the shield 12, the interface layer 2 and protective layer 6 do not contain UV stabilizing additives. The intermediate layer 4 is around 0.1 mm in thickness and comprises low molecular density polyurethane containing photochromatic naphthopyran based pigment material available from Vision-Ease, Lens, capable of changing colour in response to incident light in the 315-400 nm range. The outer coating 8 has a thickness of around 0.05 mm and comprises an anti-scratch siloxane based coating.

In use, the insert 10 is placed against the shield 12 such that the disks 22 and studs 20 align, thereby retaining the shield and insert in close contact against each other. The skilled person will be well aware of other attachment provisions that may be used instead of the magnets 20, 22. When subjected to incident sunlight, the UVA radiation above 315 nm causes actuation of the photochromatic pigment in the intermediate layer 4 which changes colour and darkens. Although UV stabilizing additives are contained in the material of the shield 12, this does not affect operation of the photochromatic pigment since the insert 10 is placed in front of the shield.

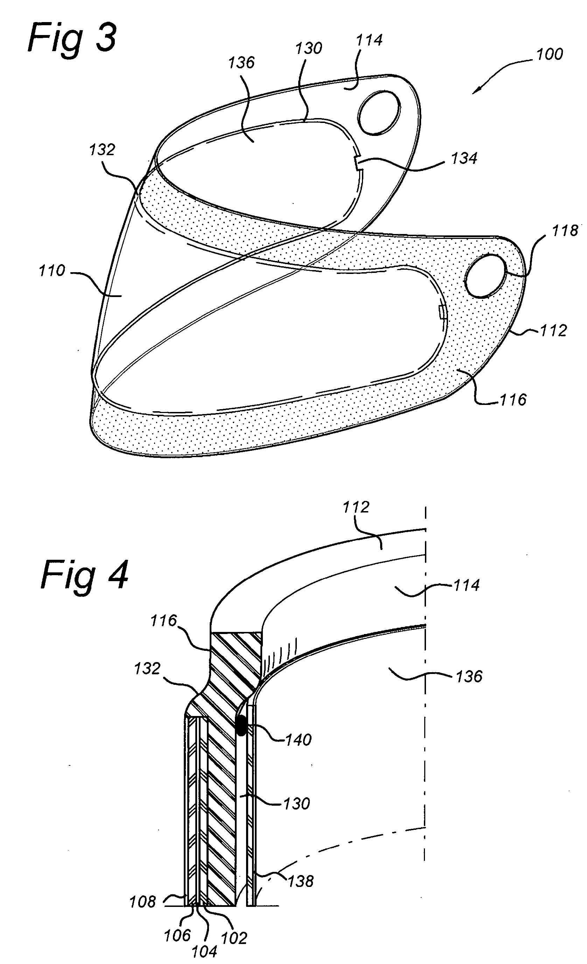

Fig. 3 shows an alternative embodiment of a visor 100 according to the invention in which like elements are denoted by the same reference numerals preceded by 100.

Visor 100 comprises a shield 112 having an inner surface 114 and an outer surface 116. Attachment elements 118 are provided for attachment to a helmet. The inner surface 114 of the shield 112 is provided with a cavity 130 covering substantially the complete viewing region of the visor 100. A bulge 132 is formed on the outer surface over the same region. At either end of the cavity 130, attachment lugs 134 are provided which protrude slightly into the cavity 130. Attachment lugs 134 support an insert lens 136 and retain it within the cavity 130. The insert lens 136 has approximately the same external shape as that of the cavity 130 and fits flush with the inner surface 114. The outer surface 116 of the shield 112 is provided with a functional insert 110 which also occupies substantially the entire viewing region. The remainder of the outer surface 116 has a slightly matt finish as will be described in further detail below.

The construction of the visor 100 is better seen with reference to Fig. 4 which shows a partial cross-section through the visor 100 of Fig. 3. According to Fig. 4 the cavity 130 at the inner surface 114 of the shield 112 can be seen in which the insert lens 136 is located. The insert lens 136 is made of cellulose acetate material and has a silicone based anti-fog coating 138 on its inner face. It is provided with a sealing bead 140 of silicone material which seals around the periphery of the insert lens 136 such that the cavity 130 is hermetically sealed. This arrangement is as described in WO 0113750 and has been found highly effective in providing a fog free viewing region.

The functional insert 110 can also be seen in Fig. 4 embedded in the outer surface 116 of the shield 112. As in the first embodiment, the insert 110 comprises an interface layer 102, an intermediate photochromatic layer 104, a protective layer 106 and an outer coating 108. The materials and thicknesses of the various layers are as described in relation to Fig. 2.

Embedding the insert 110 in the shield 112 has a number of advantages. Importantly, the resulting cavity visor comprises only two separate layers while providing both photochromatic and anti-fog functionality. Placing an anti-fog insert lens on the inner surface of the visor according to the first embodiment would have resulted in three separate layers which may lead to insufficient light transmission and a bulky construction. Another important advantage is that the functional material of the intermediate layer 104 is protected from dirt or moisture ingress even at its edges by the polycarbonate protective layer 106 and the polycarbonate material of the shield 112 which form an integral join.

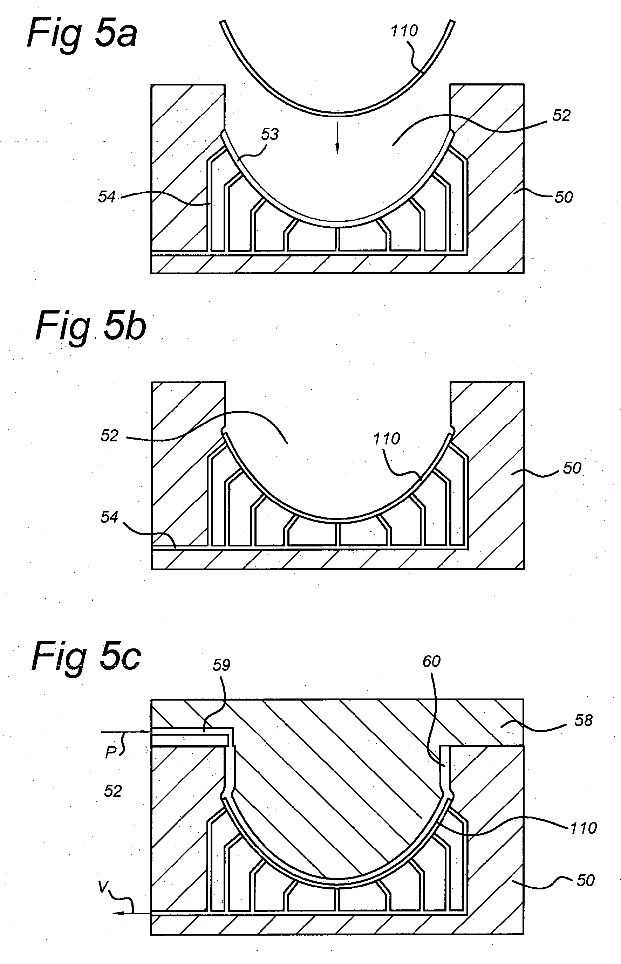

A method of forming the visor 100 of Fig. 3 will now be described with reference to Figs. 5A to 5D. In Fig. 5A, an outer mould 50 is provided having a mould cavity 52, a recess 53 and vacuum passages 54. The mould cavity 52 corresponds in shape to the intended outer surface of the visor 100 and the recess 53 has the shape of the bulge 132. The surface of the mould cavity 52 of the outer mould 50 is finished to a matt relief.

The skilled person will be aware that the roughness grade required of a mould surface at least partially determines the cost of manufacturing the mould. Optical quality finishes having Ra of 0.1 micron or better are extremely expensive compared to a matt relief. The mould 50 is heated to a temperature of around 280° C and a cut, pre-shaped insert 110 is supplied, preheated to around 130° C. The insert 110 is placed into the recess 53. The insert 110 is formed of a laminate comprising the layers 102, 104, 106, 108 as described above and is of optical grade quality.

In Fig. 5B, a vacuum V is supplied to the vacuum passages 54 and the insert 110 is drawn down into the recess 53.

In Fig. 5C, an inner mould 58 is aligned with the outer mould 50 to close the mould cavity 52. The inner mould 58 has an optical grade quality finish and is provided with injection passages 59. Molten polycarbonate visor material 60 is injected under pressure P into the mould cavity 52 through the injection passages 59. Vent passages (not shown) are provided for removing air from the mould cavity 52 as the visor material 60 advances. The vacuum V is maintained in order to ensure that the insert 110 is held tightly against the surface of the outer mould 50. As soon as injection is complete and the mould cavity 52 is filled with visor material 60, the moulds 50, 58 are cooled. This is achieved by circulating cooling water through channels (not shown) in the mould 50, 58.

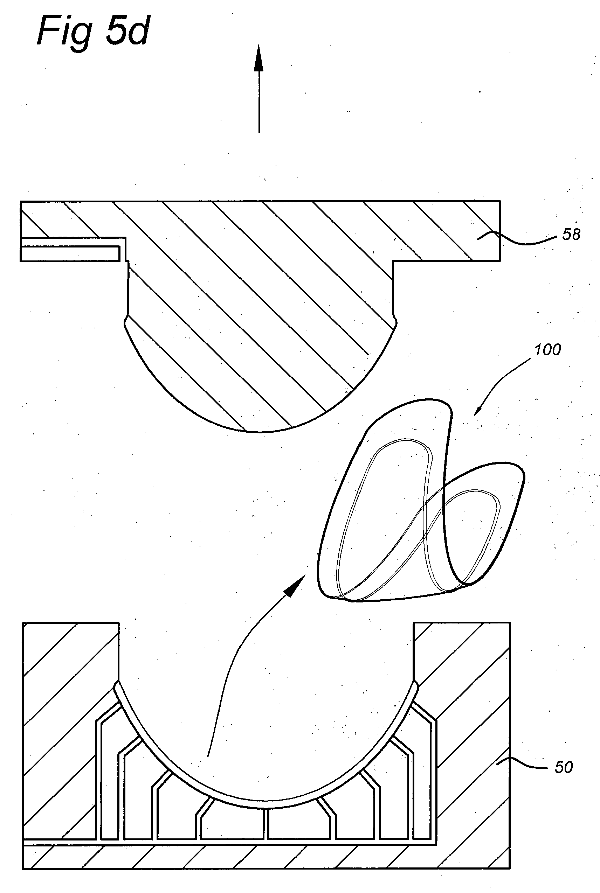

In Fig 5D, the inner mould 58 and outer mould 50 may then be separated and the completed visor 100 removed. Because the insert material 56 was already provided with an outer coating 108, no subsequent anti-scratch treatment of the visor 100 is required. The optical quality of the insert 110 has also not been affected by the thermoforming and injection moulding processes. After removal from the mould, fixation holes may be drilled in the visor. An insert lens 136 may also be added as and when required to the interior surface.

The procedure as described in relation to Figs 5A to 5D is extremely versatile in that it allows existing moulds to be easily adapted to receive inserts having different functionality. Since the outer mould does not need to be of optical quality, a new outer mould, if required, may be produced at little additional cost. The insert may be manufactured elsewhere and supplied to the visor manufacturer for incorporation into the existing moulding procedures. Furthermore, because the insert is relatively thin it will not interfere with this moulding process. Preferably, the insert will be no greater than 0.7 mm in thickness although by providing a bulge on the external surface of the visor without a corresponding recess on the inner surface, improved flow of injected material may be achieved. Alternatively, it is understood that the insert may be thermoformed within the same mould prior to injection of the shield material.

Thus, the invention has been described by reference to certain embodiments discussed above. It will be recognized that these embodiments are susceptible to various modifications and alternative forms well known to those of skill in the art. In particular, although the process has been described in relation to a cavity visor, it will be understood that it is equally applicable to visors without cavities and/or without bulges on their external surfaces.

Many modifications in addition to those described above may be made to the structures and techniques described herein without departing from the scope of the invention. Accordingly, although specific embodiments have been described, these are examples only and are not limiting upon the scope of the invention.

## Claims

1. A visor (1) for a helmet or the like, comprising a curved, transparent shield (12) having an inner surface (14) and an outer surface (16), the shield being provided with attachment elements (18) for connecting the visor to the helmet and further comprising a viewing region, the viewing region being provided with a photochromatic insert (10) at its outer surface, capable of responding to incident light, **characterized in that** the shield is formed of a first plastic material provided with an amount of UV stabilizing additives, the UV stabilizing additives protecting the first plastic material from degradation by UV radiation during use, and wherein the insert comprises a second plastic material without UV stabilizing additives or having substantially less UV stabilizing additives than the first plastic material.

2. The visor according to claim 1, wherein the second plastic material is substantially free of stabilizing additives that operate in the 315 nm to 400 nm range.

3. The visor according to any preceding claim, wherein the first and second plastic materials are the same.

4. The visor according to any preceding claim, wherein the first plastic material comprises polycarbonate.

5. The visor according to any preceding claim, wherein the insert is removably attached to the outer surface of the shield.

6. The visor according to any of claims 1 to 4, wherein the insert and the shield are integrally injection moulded together.

7. The visor according to any preceding claim, wherein the insert has a thickness of between 0.3 mm and 0.7 mm, preferably around 0.5 mm.

8. The visor according to any preceding claim, wherein the insert comprises a photochromatic layer (4) between an inner (2) and an outer (6) protective layer, at least the outer protective layer comprising the second plastic material.

9. The visor according to claim 8, wherein the photochromatic layer comprises a photochromatic pigment incorporated in a polymer having a relatively low molecular density compared to that of the first plastic material.

10. A method of manufacturing a visor for a helmet or the like having a photochromatic insert region, the method comprising:
providing insert material comprising a photochromatic layer;
thermoforming the insert material into a curved shape to form an insert;
locating the insert within a mould (50);
injection moulding visor material into the mould to form a curved visor having an inner surface and an outer surface, wherein the insert forms a portion of the outer surface, **characterized in that** the visor material comprises UV stabilising additives and the insert material comprises relatively less of the UV stabilising additives than the visor material.

11. The method according to claim 10, wherein the insert material comprises an extruded film.

12. The method according to any of claims 10 or 11, wherein the insert material comprises an optical quality surface prior to location within the mould.

13. The method according to any of claims 10 to 12, wherein the insert material comprises a multilayer laminate.

14. The method according to any of claims 10 to 13, wherein the photochromatic insert region is visibly different from the remainder of the visor and has a distinctive shape.

15. The method according to any of claims 10 to 14, wherein the mould has a cavity (52) and a surface of the cavity corresponding to the outer surface of the visor has a non-optical quality finish.

## Patentansprüche

1. Visier (1) für einen Helm oder Ähnliches, das einen gekrümmten transparenten Schild (12) mit einer inneren Oberfläche (14) und einer äußeren Oberfläche (16) aufweist, wobei der Schild mit Festmachelementen (18) zum Verbinden des Visiers mit dem Helm bereitgestellt wird und weiter einen Sichtbereich aufweist, wobei der Sichtbereich mit einem photochromatischen Einsatz (10) an seiner äußeren Oberfläche bereitgestellt wird, der in der Lage ist, auf einfallendes Licht zu reagieren, **dadurch gekennzeichnet, dass** der Schild aus einem ersten Plastikmaterial gebildet wird, das mit einer Menge von UV-stabilisierenden Zusätzen bereitgestellt ist, wobei die UV-stabilisierenden Zusätze das erste Plastikmaterial während der Verwendung vor der Zersetzung durch UV-Strahlung schützen und wobei der Einsatz ein zweites Plastikmaterial ohne UV-stabilisierende Zusätze oder mit wesentlich weniger UV-stabilisierenden Zusätzen als das erste Plastikmaterial aufweist.

2. Visier nach Anspruch 1, wobei das zweite Plastikmaterial im Wesentlichen frei von stabilisierenden Zusätzen ist, die in einem Bereich von 315 nm zu 400 nm wirken.

3. Visier nach einem der vorherigen Ansprüche, wobei das erste und zweite Plastikmaterial gleich sind.

4. Visier nach einem der vorherigen Ansprüche, wobei das erste Plastikmaterial Polycarbonat aufweist.

5. Visier nach einem der vorherigen Ansprüche, wobei der Einsatz entfernbar mit der äußeren Oberfläche des Schildes verbunden ist.

6. Visier nach einem der Ansprüche 1 bis 4, wobei der Einsatz und der Schild integral zusammen spritzgegossen sind.

7. Visier nach einem der vorherigen Ansprüche, wobei der Einsatz eine Dicke zwischen 0,3 mm und 0,7 mm, bevorzugt um 0,5 mm hat.

8. Visier nach einem der vorherigen Ansprüche, wobei der Einsatz eine photochromatische Schicht (4) zwischen einer inneren (2) und einer äußeren (6) Schutzschicht aufweist, wobei wenigstens die äußere Schutzschicht das zweite Plastikmaterial aufweist.

9. Visier nach Anspruch 8, wobei die photochromatische Schicht ein photochromatisches Pigment aufweist, das in ein Polymer mit, verglichen mit der des ersten Plastikmaterials, einer relativ geringen Molekulardichte eingearbeitet ist.

10. Verfahren zum Herstellen eines Visiers für einen Helm oder Ähnliches mit einem photochromatischen Einsatzbereich, wobei das Verfahren aufweist:
Bereitstellen eines Einsatzmaterials, das eine photochromatische Schicht aufweist;
Thermoformen des Einsatzmaterials in eine gebogene Form zum Bilden eines Einsatzes;
Platzieren des Einsatzes innerhalb einer Form (50);
Spritzgießen von Visiermaterial in die Form zum Bilden eines gebogenen Visiers mit einer inneren Oberfläche und einer äußeren Oberfläche, wobei der Einsatz einen Teil der äußeren Oberfläche bildet, **dadurch gekennzeichnet, dass** das Visiermaterial UV-stabilisierende Zusätze aufweist und das Einsatzmaterial relativ wenige UV-stabilisierende Zusätze verglichen mit dem Visiermaterial aufweist.

11. Verfahren nach Anspruch 10, wobei das Einsatzmaterial einen extrudierten Überzug aufweist.

12. Verfahren nach einem der Ansprüche 10 oder 11, wobei das Einsatzmaterial eine Oberfläche mit optischer Qualität vor der Platzierung innerhalb der Form aufweist.

13. Verfahren nach einem der Ansprüche 10 bis 12, wobei das Einsatzmaterial ein Mehrschichtlaminat aufweist.

14. Verfahren nach einem der Ansprüche 10 bis 13, wobei der photochromatische Einsatzbereich sichtbar anders als der Rest des Visiers ist und eine unterscheidbare Form hat.

15. Verfahren nach einem der Ansprüche 10 bis 14, wobei die Form eine Aussparung (52) hat und eine Oberfläche der Aussparung, die mit der äußeren Oberfläche des Visiers übereinstimmt, ein Finish mit nicht-optischer Qualität hat.

## Revendications

1. Visière (1) pour casque ou analogue, comprenant un écran transparent incurvé (12) ayant une surface intérieure (14) et une surface extérieure (16), l'écran étant muni d'éléments de fixation (18) pour relier la visière au casque et comprenant de plus une zone de visualisation, la zone de visualisation étant munie d'un insert photochromatique (10) à sa surface extérieure, capable de répondre à une lumière incidente **caractérisée en ce que** l'écran est formé d'une première matière plastique munie d'une quantité d'additifs de stabilisation aux UV, les additifs de stabilisation aux UV protégeant la première matière plastique vis-à-vis d'une dégradation par un rayonnement UV pendant une utilisation, et dans laquelle l'insert comprend une seconde matière plastique sans additif de stabilisation aux UV ou ayant sensiblement moins d'additifs de stabilisation aux UV que la première matière plastique.

2. Visière selon la revendication 1, dans laquelle la seconde matière plastique est sensiblement exempte d'additifs de stabilisation qui agissent dans la plage de 315 nm à 400 nm.

3. Visière selon l'une quelconque des revendications précédentes, dans laquelle les première et seconde matières plastiques sont les mêmes.

4. Visière selon l'une quelconque des revendications précédentes, dans laquelle la première matière plastique comprend du polycarbonate.

5. Visière selon l'une quelconque des revendications précédentes, dans laquelle l'insert est fixé de manière amovible sur la surface extérieure de l'écran.

6. Visière selon l'une quelconque des revendications 1 à 4, dans laquelle l'insert et l'écran sont moulés ensemble d'un seul tenant par injection.

7. Visière selon l'une quelconque des revendications précédentes, dans laquelle l'insert a une épaisseur comprise entre 0,3 mm et 0,7 mm, de préférence d'environ 0,5 mm.

8. Visière selon l'une quelconque des revendications précédentes dans laquelle l'insert comprend une couche photochromatique (4) entre une couche de protection intérieure (2) et extérieure (6), au moins la couche de protection extérieure comprenant de la seconde matière plastique.

9. Visière selon la revendication 8, dans laquelle la couche photochromatique comprend un pigment photochromatique incorporé dans un polymère ayant une densité moléculaire relativement faible comparée à celle de la première matière plastique.

10. Méthode de fabrication d'une visière de casque ou analogue ayant une zone d'insert photochromatique, la méthode consistant à :
fournir un matériau d'insert comprenant une couche photochromatique ;
thermoformer le matériau d'insert selon une forme incurvée pour former un insert ;
positionner l'insert dans un moule (50) ;
mouler par injection un matériau de visière dans le moule pour former une visière incurvée ayant une surface intérieure et une surface extérieure, dans laquelle l'insert forme une partie de la surface extérieure, **caractérisée en ce que** le matériau de visière comprend des additifs de stabilisation aux UV et le matériau d'insert comprend relativement moins d'additifs de stabilisation aux UV que le matériau de visière.

11. Méthode selon la revendication 10, dans laquelle le matériau d'insert comprend un film extrudé.

12. Méthode selon l'une quelconque des revendications 10 ou 11, dans laquelle le matériau d'insert comprend une surface de qualité optique avant positionnement dans le moule.

13. Méthode selon l'une quelconque des revendications 10 à 12, dans laquelle le matériau d'insert comprend un stratifié multicouche.

14. Méthode selon l'une quelconque des revendications 10 à 13, dans laquelle la zone d'insert photochromatique est visiblement différente du reste de la visière et a une forme distinctive.

15. Méthode selon l'une quelconque des revendications 10 à 14, dans laquelle le moule a une cavité (52), et une surface de la cavité correspondant à la surface externe de la visière a une finition de qualité non-optique.
